# EUROPEAN PATENT SPECIFICATION

(11) **EP 4 420 909 B1**
(45) Date of publication and mention of the grant of the patent: **24.06.2026**
(21) Application number: 23858704.2
(22) Date of filing: 27.04.2023
(51) Int. Cl.: B60K 11/02, H02K 9/19, B60K 11/04

(54) **POWERTRAIN AND MECHANICAL EQUIPMENT**
ANTRIEBSSTRANG UND MECHANISCHE AUSRÜSTUNG
GROUPE MOTOPROPULSEUR ET ÉQUIPEMENT MÉCANIQUE

(30) Priority: 31.08.2022 CN 202211061684
(43) Date of publication of application: 28.08.2024
(73) Proprietor: Huawei Digital Power Technologies Co., Ltd., Shenzhen, Guangdong 518043 (CN)
(72) Inventor: YANG, Shaobo, Shenzhen, Guangdong 518043 (CN); LI, Quanming, Shenzhen, Guangdong 518043 (CN); WANG, Heng, Shenzhen, Guangdong 518043 (CN)
(74) Representative: Maiwald GmbH
(86) International application number: PCT/CN2023/091357
(87) International publication number: WO 2024/045664

(56) References cited:
- CN-A- 108 944 395
- CN-A- 109 756 056
- CN-A- 111 959 252
- CN-A- 112 234 770
- CN-A- 113 978 223
- CN-A- 114 204 752
- CN-A- 114 374 294
- CN-A- 114 499 062
- CN-A- 115 489 289
- CN-U- 202 142 954
- CN-U- 209 666 800
- FR-A1- 3 096 524
- JP-A- 2014 007 884
- US-A1- 2019 291 570
- US-A1- 2022 126 677
- US-B1- 6 323 613
- US-B2- 10 879 770

## Description

### CROSS-REFERENCE TO RELATED APPLICATIONS

This application claims priority to Chinese Patent Application No. 202211061684.7, filed with the China National Intellectual Property Administration on August 31, 2022 and entitled "POWERTRAIN AND MECHANICAL DEVICE".

### TECHNICAL FIELD

This application relates to the field of mechanical device technologies, and in particular, to a powertrain and a mechanical device.

### BACKGROUND

As electric vehicles develop, a demand for miniaturization of powertrains is increasingly improved. Currently, the electric vehicles further include electronic assemblies such as a microcontroller unit (microcontroller unit, MCU) and an on-board charger (on-board charger, OBC). To reduce a volume of a structure, in addition to a motor, a powertrain in the conventional technology may further include the foregoing electronic assemblies. A power density of the motor in the powertrain needs to be increased from current 5.7 kW/L to 50 kW/L. As the power density increases, heat of the motor gradually increases, and the electronic assemblies are usually provided with a heating device. Therefore, the powertrain usually has a cooling system to dissipate heat for all parts of the powertrain.

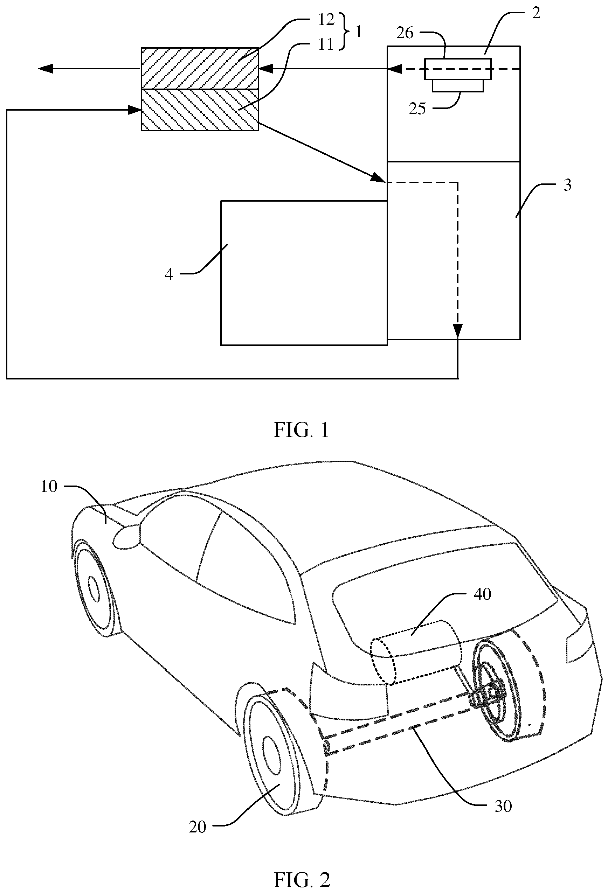

FIG. 1 is a schematic diagram of flowing of a cooling working medium of a powertrain in the conventional technology. As shown in FIG. 1, in the conventional technology, the powertrain includes an electronic assembly 2, a motor 3, and a reducer 4. In addition, the powertrain is further connected to a heat exchanger 1. External coolant and the cooling working medium flow in the heat exchanger 1. The cooling working medium dissipates heat for the motor 3, and the external coolant dissipates heat for the electronic assembly 2. Non-insulated 50% glycol is usually used as the external coolant, and the external coolant can only indirectly cool the electronic assembly 2, that is, the external coolant flows through a heat sink 27 attached to an electronic component 26, to cool the electronic component 26. The heat sink 27 has a strict sealing requirement; otherwise, the external coolant leaks, and there is a short circuit risk. In addition, a water pipe needs to be used to connect the electronic assembly 2 and the heat exchanger 1 outside the powertrain, and a flow resistance requirement of the water pipe is high. This requires that when the powertrain is arranged, positions of connection openings of the electronic assembly 2 and the heat exchanger 1 should be fully considered to reserve external arrangement space for the water pipe, to ensure that the water pipe is easy to arrange and is not worn on a housing surface. This often limits an overall structure and affects integration. In addition, avoidance of an internal component and a volume need to be considered when the water pipe and the heat sink 27 in the electronic assembly 2 are disposed. Therefore, it is difficult to improve a heat dissipation capability and heat dissipation efficiency of the electronic assembly 2.

US 2019/0291570 A1 describes a dual loop liquid cooling of an integrated electric drivetrain.

### SUMMARY

This application provides a powertrain and a mechanical device, to improve integration of the powertrain and heat dissipation effect of the powertrain.

The present invention is defined by the subject-matter of independent claim 1.

### Additional features of the invention are presented in the dependent claims.

According to a first aspect, this application provides a powertrain, and the powertrain includes a heat exchanger, an electronic assembly, and a motor. Specifically, the electronic assembly includes a first housing, and the motor includes a second housing. The first housing is fastened to the second housing, and the heat exchanger is also fastened to the first housing, so that both the heat exchanger and the electronic assembly and both the electronic assembly and the motor are fastened as a whole. The electronic assembly includes an electronic component. The electronic component is specifically disposed in an accommodation cavity of the first housing, and the electronic component may specifically include a heat generating component. The heat exchanger includes a first flow channel. The first flow channel is configured to transmit a cooling working medium. The cooling working medium may specifically dissipate heat for the powertrain. The electronic assembly includes a second flow channel, the second flow channel passes through the accommodation cavity of the first housing, and the second flow channel communicates with the first flow channel. Therefore, the cooling working medium may flow to the accommodation cavity of the first housing through the second flow channel, to dissipate heat for the electronic component in the electronic assembly. The motor includes a third flow channel, the third flow channel passes through an accommodation cavity of the second housing, and the third flow channel communicates with the first flow channel. Therefore, the cooling working medium can flow to the accommodation cavity of the second housing through the third flow channel, to dissipate heat for the stator and a rotor in the motor. In this embodiment of this application, the cooling working medium that dissipates heat for the electronic assembly and the motor all comes from the first flow channel, so that a same cooling working medium can be used to dissipate heat for the electronic assembly and the motor. This helps improve integration of the powertrain and reduce a volume of the powertrain. In addition, the cooling working medium is usually insulated cooling oil. Therefore, when the cooling working medium is used to dissipate heat for the electronic assembly, there is no short-circuit risk. In addition, this also helps improve heat dissipation effect on the electronic assembly, improve a heat dissipation capability and heat dissipation efficiency of the electronic assembly, and improve heat dissipation effect of the powertrain.

The first flow channel of the heat exchanger may dissipate heat naturally, or dissipate heat by using a fan, so that the cooling working medium cools down. Alternatively, in another technical solution, the heat exchanger further includes a fourth flow channel. The fourth flow channel is configured to transmit external coolant, and a heat exchange wall is disposed between the first flow channel and the fourth flow channel. The cooling working medium in the first flow channel and the external coolant in the fourth flow channel exchange heat through the heat exchange wall, and the external coolant is used to dissipate heat for the cooling working medium, so that the cooling working medium is recycled. The solution is beneficial to improving a heat exchange capacity of the heat exchanger, further improving a heat dissipation capacity of the powertrain, and improving working efficiency of the powertrain.

The powertrain may further include a reducer. The reducer includes a third housing, and the third housing is fastened to the second housing, so that the reducer is fastened to the motor. The reducer includes a fifth flow channel, the fifth flow channel passes through an accommodation cavity of the third housing, and the fifth flow channel communicates with the first flow channel. Therefore, the cooling working medium may flow to the accommodation cavity of the third housing through the fifth flow channel, to dissipate heat and provide lubrication for a rotating part in the reducer.

According to the invention, the electronic assembly includes a first sub-portion and a second sub-portion, the first housing includes a first accommodation cavity and a second accommodation cavity, the first sub-portion is disposed in the first accommodation cavity, the second sub-portion is disposed in the second accommodation cavity, and the second flow channel is disposed in the first accommodation cavity. In this solution, the cooling working medium of the second flow channel may be used to dissipate heat for the first sub-portion. That is, heat of a part of a structure of the electronic assembly can be dissipated by using the cooling working medium. Specifically, heat of the first sub-portion is large, and this solution helps improve heat dissipation effect of the first sub-portion.

In another technical solution, the second accommodation cavity includes a sixth flow channel, and the sixth flow channel communicates with the fourth flow channel. That is, the external coolant may flow through the second sub-portion through the sixth flow channel. Therefore, heat is dissipated for the second sub-portion by using the external coolant.

In addition, when the electronic assembly includes a first sub-portion and a second sub-portion, the first housing includes a first accommodation cavity and a second accommodation cavity, the first sub-portion is disposed in the first accommodation cavity, the second sub-portion is disposed in the second accommodation cavity, and the second flow channel is disposed in the first accommodation cavity. The second accommodation cavity includes a sixth flow channel, and the sixth flow channel communicates with the first flow channel. In this solution, the cooling working medium may be used to dissipate heat on all the structure of the powertrain, to improve integration of the powertrain and reduce a volume of the powertrain.

When the foregoing heat exchanger is specifically disposed, a specific structure of the heat exchanger is not limited. In a technical solution, the first flow channel includes a first sub-flow channel and a second sub-flow channel. The heat exchange wall includes a first heat exchange wall and a second heat exchange wall, the first heat exchange wall is located between the first sub-flow channel and the fourth flow channel, and the second heat exchange wall is located between the second sub-flow channel and the fourth flow channel. In a specific technical solution, the first sub-flow channel and the second sub-flow channel may be respectively located on two sides of the fourth flow channel. In this solution, the external coolant in the fourth flow channel may be used to dissipate heat for the cooling working medium in the two sub-flow channels. Specifically, the first sub-flow channel may be enabled to communicate with the third flow channel, and the second sub-flow channel may be enabled to communicate with the second flow channel. In this embodiment, the cooling working medium flowing through the electronic assembly may be separated from the cooling working medium flowing through the motor. This helps reduce impurities in the cooling working medium flowing through the electronic assembly, and helps reduce a short-circuit risk of the electronic assembly.

To dispose the foregoing heat exchanger, the first housing may have a first concave portion and the second housing may have a second concave portion. After the first housing and the second housing are snap-fitted, the first concave portion and the second concave portion are opposite to each other and form an accommodation space, and the heat exchanger is located in the accommodation space. The first sub-flow channel is located in the first concave portion, the second sub-flow channel is located in the second concave portion, the first housing and the second housing are snap-fitted, and the fourth flow channel is formed between an outer wall of the first sub-flow channel and an outer wall of the second sub-flow channel. The solution can improve integration of the powertrain and help reduce a volume of the powertrain.

In another technical solution, the first housing has a first concave portion, and the second housing has a second concave portion. After the first housing and the second housing are snap-fitted, the first concave portion and the second housing are opposite to each other and form a first accommodation space, and the second concave portion and the first housing are opposite to each other and form a second accommodation space. One part of the heat exchanger is located in the first accommodation space, and the other part of the heat exchanger is located in the second accommodation space. The first sub-flow channel is located in the first concave portion, the second sub-flow channel is located in the second concave portion, and the first housing and the second housing are snap-fitted. A part of the fourth flow channel is formed between an outer wall of the first sub-flow channel and the second housing. A part of the fourth flow channel is also formed between an outer wall of the second sub-flow channel and the first housing. The two parts of the fourth flow channel are connected in series, so that the external coolant flows through the two parts of the fourth flow channel, and heat of the cooling working medium in the first sub-flow channel and the second sub-flow channel is respectively taken away. The solution can also improve integration of the powertrain and help reduce a volume of the powertrain.

The powertrain may further include a filter, and a specific disposing position of the filter is not limited, as long as the filter communicates with the first flow channel, and the filter is disposed in a loop of the cooling working medium.

In a further technical solution, the filter communicates with a liquid inlet of the second flow channel. In this solution, the cooling working medium may be filtered before entering the electronic assembly, to improve cleanliness of the cooling working medium entering the electronic assembly and reduce a short-circuit risk of the electronic assembly.

When heat dissipation of the electronic assembly is specifically implemented, the electronic assembly may include the electronic component and a heat sink, and the electronic component is thermally connected to the heat sink. There is a cavity inside the heat sink, and the second flow channel passes through the heat sink, or the cavity of the heat sink is a part of the second flow channel. The cooling working medium flows through the heat sink to dissipate heat for the electronic component.

In another technical solution, the electronic assembly includes the electronic component and a heat dissipation cavity, and the electronic component is disposed in a cavity of the heat dissipation cavity. At least part of a structure of the second flow channel is located in the heat dissipation cavity, and the heat dissipation cavity becomes a part of the second flow channel, so that the cooling working medium flows through the cavity of the heat dissipation cavity. In this solution, the electronic component can be immersed in the cooling working medium, to improve a heat dissipation capability of the electronic component.

In a specific technical solution, heat dissipation fins are disposed on a surface of the electronic component. In this case, the heat dissipation fins can be immersed in the cooling working medium to improve heat dissipation efficiency of the electronic component.

The powertrain may include a mechanical fuel pump. The mechanical fuel pump communicates with the first flow channel and is configured to drive the cooling working medium to flow. The mechanical fuel pump is in transmission connection to the motor, so that the motor can be used to drive the mechanical fuel pump to run. The cooling working medium for driving the powertrain flows between each flow channel. In this solution, the motor in a working process can drive the cooling working medium to flow without an additional driver. This is beneficial to reducing energy consumption of the powertrain and implementing energy saving.

In a further technical solution, the powertrain may further include an electronic fuel pump, and the electronic fuel pump communicates with the first flow channel and is configured to drive the cooling working medium to flow. The mechanical fuel pump cooperates with the electronic fuel pump, and when the mechanical fuel pump can meet a flow velocity requirement of the cooling working medium, only the mechanical fuel pump can be used to drive the cooling working medium to flow. This can realize an effect of energy saving. Especially for an electric vehicle, power consumption can be reduced, so that endurance of the vehicle can be improved. In addition, the cooling working medium is viscous at a low temperature, and the mechanical fuel pump can reliably drive the cooling working medium to flow, to ensure that a refrigerating system can be started at a low temperature. When a working condition is harsh, that is, a heat dissipation requirement is high, the electronic fuel pump can be started to increase a flow velocity of the cooling working medium, improve a heat dissipation capacity of the powertrain, and ensure heat dissipation effect of the powertrain.

In addition, when the powertrain includes the electronic fuel pump and the electronic fuel pump communicates with the first flow channel, the electronic fuel pump may be electrically connected to a controller, and the controller is configured to control the electronic fuel pump to rotate forward or reversely. The electronic fuel pump in the solution can be reversed to reversely flush impurities in each flow channel or filter, to ensure that the cooling working medium can be in a working state and improve heat dissipation reliability of the powertrain in a working process.

According to a second aspect, this application further provides a mechanical device. The mechanical device includes an output portion, a drive mechanism, and the powertrain in the first aspect. The powertrain is connected to the output portion via the drive mechanism. Specifically, the mechanical device may be an electric vehicle. The powertrain in this solution has a strong heat dissipation capability and high integration. This is beneficial to reducing a space occupied by the powertrain and improving performance of the mechanical device.

### BRIEF DESCRIPTION OF DRAWINGS

FIG. 1 is a schematic diagram of flowing of a cooling working medium of a powertrain in the conventional technology;
FIG. 2 is a schematic diagram of a structure of an electric vehicle according to an embodiment of this application;
FIG. 3 is a schematic diagram of a structure of a powertrain according to an embodiment of this application;
FIG. 4 is a schematic diagram of flowing of a cooling working medium of a powertrain according to an embodiment of this application;
FIG. 5 is another schematic diagram of flowing of a cooling working medium of a powertrain according to an embodiment of this application;
FIG. 6 is another schematic diagram of flowing of a cooling working medium of a powertrain according to an embodiment of this application;
FIG. 7 is another schematic diagram of flowing of a cooling working medium of a powertrain according to an embodiment of this application;
FIG. 8 is another schematic diagram of flowing of a cooling working medium of a powertrain according to an embodiment of this application;
FIG. 9 is another schematic diagram of flowing of a cooling working medium of a powertrain according to an embodiment of this application;
FIG. 10 is a schematic diagram of flowing of a cooling working medium of a powertrain according to the invention;
FIG. 11 is another schematic diagram of flowing of a cooling working medium of a powertrain according to an embodiment of this application;
FIG. 12 is another schematic diagram of flowing of a cooling working medium of a powertrain according to an embodiment of this application;
FIG. 13 (a) to FIG. 13 (g) are schematic diagrams of flowing of a cooling working medium of a powertrain according to an embodiment of this application;
FIG. 14 is another schematic diagram of flowing of a cooling working medium of a powertrain according to an embodiment of this application;
FIG. 15 is another schematic diagram of flowing of a cooling working medium of a powertrain according to an embodiment of this application;
FIG. 16 is another schematic diagram of flowing of a cooling working medium of a powertrain according to an embodiment of this application;
FIG. 17 is a schematic diagram of another structure of a powertrain according to an embodiment of this application;
FIG. 18 is a schematic diagram of another structure of a powertrain according to an embodiment of this application;
FIG. 19 is a schematic diagram of another structure of a powertrain according to an embodiment of this application;
FIG. 20 is another schematic diagram of flowing of a cooling working medium of a powertrain according to an embodiment of this application;
FIG. 21 is another schematic diagram of flowing of a cooling working medium of a powertrain according to an embodiment of this application;
FIG. 22 is a schematic diagram of a structure of an electronic assembly according to an embodiment of this application;
FIG. 23 is a schematic diagram of a structure of an electronic assembly according to an embodiment of this application;
FIG. 24 is another schematic diagram of flowing of a cooling working medium of a powertrain according to an embodiment of this application; and
FIG. 25 is another schematic diagram of flowing of a cooling working medium of a powertrain according to an embodiment of this application.

### Reference numerals:

10-framework; 20-output portion;
30-drive mechanism; 40-powertrain;
1-heat exchanger; 11-first flow channel;
111-first sub-flow channel; 112-second sub-flow channel;
12-fourth flow channel; 2-electronic assembly;
21-first housing; 211-first concave portion;
22-second flow channel; 23-first sub-portion;
24-second sub-portion; 25-sixth flow channel;
26-electronic component; 27-heat sink;
28-heat dissipation cavity; 29-heat dissipation fin;
3-motor; 31-second housing;
311-second concave portion; 32-third flow channel;
4-reducer; 41-third housing;
42-fifth flow channel; 5-filter;
6-mechanical fuel pump; and 7-electronic fuel pump.

### DESCRIPTION OF EMBODIMENTS

Terms used in the following embodiments are merely intended to describe specific embodiments, but are not intended to limit this application. Terms "one", "a", "the", "the foregoing", and "this" of singular forms used in this specification and the appended claims of this application are also intended to include expressions such as "one or more", unless the context clearly indicates to the contrary.

Reference to "an embodiment", "a specific embodiment", or the like described in this specification indicates that one or more embodiments of this application include a specific feature, structure, or characteristic described with reference to the embodiment. Terms "include", "have", and their variants all mean "include but are not limited to", unless otherwise specifically emphasized in another manner.

To facilitate understanding of a powertrain and a mechanical device provided in embodiments of this application, the following first describes application scenarios of the powertrain and the mechanical device. Currently, a vehicle is used in more scenarios in production and life, and in particular, application of an electric vehicle is gradually increasing. As a power component of the electric vehicle, the powertrain plays an important role in performance of the electric vehicle. The powertrain generates a large amount of heat in a working process. Therefore, an important measure to ensure that the powertrain works stably and has a long service life is to maintain effective heat dissipation. In addition, as technologies develop, there are more powertrain integration structures. Therefore, it is also important to improve integration of the powertrain and reduce a volume of the powertrain. Therefore, this application provides a powertrain and a mechanical device.

A specific type of the mechanical device in embodiments of this application is not limited. For example, the mechanical device may be an electric vehicle (Electric Vehicle, EV for short), a pure device (Pure Electric Vehicle/Battery Electric Vehicle, PEV/BEV for short), a hybrid electric vehicle (Hybrid Electric Vehicle, HEV for short), a range extended device (Range Extended Electric Vehicle, REEV for short), a plug-in hybrid electric vehicle (Plug-in Hybrid Electric Vehicle, PHEV for short), a new energy vehicle (New Energy Vehicle), a battery management (Battery Management) device, a motor&driver (Motor&Driver), a power converter (Power Converter), a reducer (Reducer), and the like. With reference to the accompanying drawings, the following briefly describes the mechanical device in embodiments of this application by using an electric vehicle as the mechanical device.

To make objectives, technical solutions, and advantages of this application clearer, the following further describes this application in detail with reference to the accompanying drawings.

It should be noted that "communicate" mentioned in embodiments of this application means that liquid (external coolant or a cooling working medium) may flow between two structures, and the two structures may be directly connected, or may be connected through another structure, provided that liquid flowing can be implemented. For example, A communicates with B, including a case in which A and B are directly connected, or C is further connected between A and B, and liquid flows through A, C, and B in sequence. "Connect" in embodiments of this application means that two structures are directly connected or are connected through a pipe without another structure. In addition, "flow channel" mentioned in embodiments of this application means that liquid may flow through the flow channel, and a form of the flow channel is not limited. For example, the flow channel may be in an elongated tubular shape, may also be a cavity, or the like, as long as the liquid can flow through.

FIG. 2 is a schematic diagram of a structure of an electric vehicle according to an embodiment of this application. Refer to FIG. 2. A mechanical device in this embodiment of this application includes a framework 10, an output portion 20, a drive mechanism 30, and a powertrain 40. The output portion 20, the drive mechanism 30, and the powertrain 40 are installed on the framework 10, and the powertrain 40 is connected to the output portion 20 via the drive mechanism 30. The powertrain 40 is configured to convert electric energy into mechanical energy. The drive mechanism 30 is connected to the powertrain 40 and is configured to transmit the mechanical energy to the output portion 20 of the mechanical device. The output portion 20 is configured to output the mechanical energy generated by the powertrain 40. In a specific embodiment, when the mechanical device is a vehicle like an electric vehicle, the output portion 20 may be specifically a wheel.

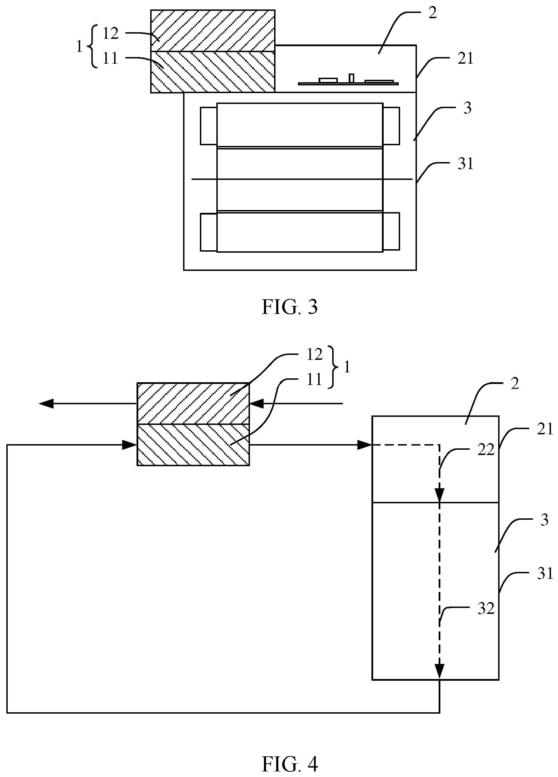

FIG. 3 is a schematic diagram of a structure of a powertrain according to an embodiment of this application. FIG. 4 is a schematic diagram of flowing of a cooling working medium of a powertrain according to an embodiment of this application. FIG. 3 shows a connection relationship between structures of the powertrain. FIG. 4 is mainly used to illustrate a flow path of the cooling working medium of the powertrain. As shown in FIG. 3 and FIG. 4, an embodiment of this application further provides the powertrain. The powertrain includes a heat exchanger 1, an electronic assembly 2, and a motor 3. The electronic assembly 2 includes a first housing 21, the electronic assembly includes an electronic component, and the electronic component is disposed in an accommodation cavity of the first housing 21. The motor 3 may specifically include a second housing 31, and structures such as a stator and a mover of the motor 3 are disposed in an accommodation cavity of the second housing 31. The first housing 21 is fastened to the second housing 31, and the heat exchanger 1 is fastened to the second housing 31, so that the heat exchanger 1, the electronic assembly 2, and the motor 3 are integrated into the powertrain, to facilitate assembly of the powertrain, and help reduce a volume of the powertrain. The heat exchanger 1 includes a first flow channel 11. The first flow channel 11 is configured to transmit the cooling working medium, and the cooling working medium is used to dissipate heat for a component of the powertrain. For example, the cooling working medium is used to dissipate heat for the electronic assembly 2 and the motor 3. Specifically, the electronic assembly 2 further includes a second flow channel 22, the second flow channel 22 passes through the accommodation cavity of the first housing 21, and the second flow channel 22 communicates with the first flow channel 11. In this way, the cooling working medium can flow to the second flow channel 22, to dissipate heat for the electronic component in the accommodation cavity of the electronic assembly 2. The motor 3 further includes a third flow channel 32. The third flow channel 32 passes through the accommodation cavity of the second housing 31, and the third flow channel 32 also communicates with the first flow channel 11, so that the cooling working medium can flow to the third flow channel 32, to dissipate heat for a motor component in the accommodation cavity of the motor 3. In this embodiment of this application, the same cooling working medium may be used to dissipate heat for the electronic assembly 2 and the motor 3, so that integration of the powertrain is improved, and the volume of the powertrain is reduced. In addition, the cooling working medium is usually insulated cooling oil. Therefore, when the cooling working medium is used to dissipate heat for the electronic assembly 2, there is no short-circuit risk. In addition, this improves heat dissipation effect on the electronic assembly 2, and improves a heat dissipation capability and heat dissipation efficiency of the electronic assembly 2.

Still refer to FIG. 4. In a specific embodiment, the heat exchanger further includes a fourth flow channel 12. The fourth flow channel 12 is configured to transmit external coolant, and a heat exchange wall is disposed between the first flow channel 11 and the fourth flow channel 12. To be specific, the first flow channel 11 and the fourth flow channel 12 are connected for heat exchange, so that the heat exchange can be performed between the external coolant and the cooling working medium. For example, the first flow channel 11 and the fourth flow channel 12 are disposed adjacently, so that the cooling working medium and the external coolant can exchange heat through the heat exchange wall. Specifically, the cooling working medium is mainly used to dissipate heat for the powertrain, and the external coolant is mainly used to replace and take away heat of the cooling working medium, so that the cooling working medium can be recycled. This solution is beneficial to improving a heat exchange capacity of the heat exchanger, and further improving a heat dissipation capacity of the powertrain.

In another embodiment, the cooling working medium in the first flow channel 11 may further dissipate heat by using fresh air. In other words, a heat sink may be disposed outside the first flow channel 11, to improve a heat dissipation capability of the cooling working medium in the first flow channel.

The external coolant in embodiments of this application may be specifically an air conditioning system refrigerant, air conditioning coolant, air-cooled system coolant, or the like. This is not limited in this application.

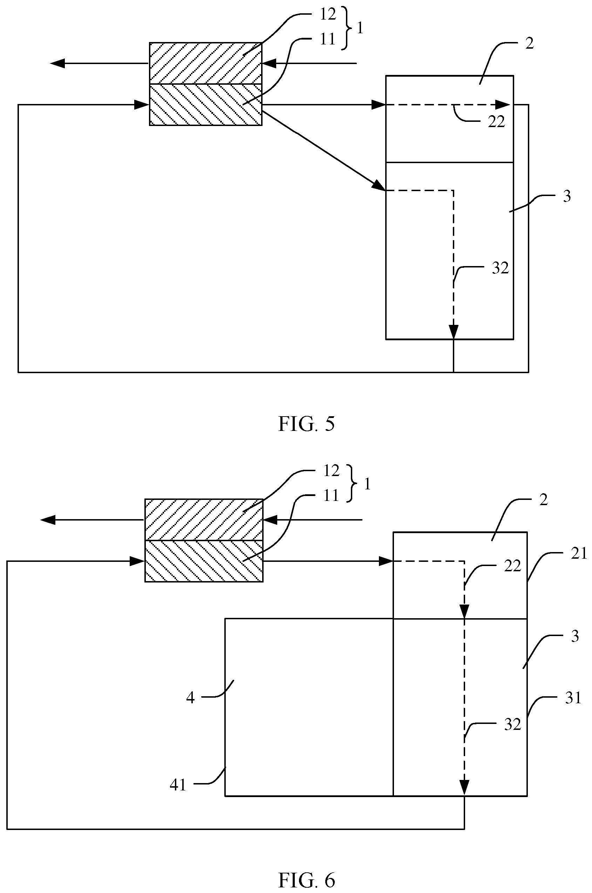

In a specific embodiment, a sequence in which the cooling working medium flows through the electronic assembly 2 and the motor 3 is not limited. In an embodiment, as shown in FIG. 4, the first flow channel 11, the second flow channel 22, and the third flow channel 32 are successively connected. In this case, after flowing out of the first flow channel 11, the cooling working medium first flows to the second flow channel 22 to dissipate heat for the electronic assembly 2, and then flows to the third flow channel 32 to dissipate heat for the motor 3. Because the cooling working medium may be in direct contact with the electronic component in the electronic assembly 2, cleanliness of the cooling working medium is required to be high. Therefore, the cooling working medium may first flow to the electronic assembly 2 and then flow to the motor 3, so that a quantity of impurities carried by the cooling working medium from the motor 3 to the electronic assembly 2 can be reduced, to reduce a short-circuit risk of the electronic assembly 2. Certainly, in another embodiment, the first flow channel 11, the third flow channel 32, and the second flow channel 22 may be sequentially connected. It may be understood that the second flow channel 22 and the third flow channel 32 are connected in series. FIG. 5 is another schematic diagram of flowing of a cooling working medium of a powertrain according to an embodiment of this application. As shown in FIG. 5, in another embodiment, the second flow channel 22 and the third flow channel 32 separately communicate with the first flow channel 11. To be specific, after the cooling working medium flows out of the first flow channel 11, one part of the cooling working medium flows to the second flow channel 22 and the other part of the cooling working medium flows to the third flow channel 32. It may be understood that the third flow channel 32 and the second flow channel 22 are connected in parallel. In general, the first flow channel 11, the third flow channel 32, and the second flow channel 22 are communicated to form a cooling loop.

FIG. 6 is another schematic diagram of flowing of a cooling working medium of a powertrain according to an embodiment of this application. As shown in FIG. 6, in another embodiment, the powertrain may further include a reducer 4, the reducer 4 includes a third housing 41, and the third housing 41 is fastened to the second housing 31. Specifically, the second housing 31 may be fastened to the third housing 41 by using a connection structure like a screw, or the second housing 31 and the third housing 41 may be an integrated structure. The reducer 4 may be in transmission connection to the motor 3 through a transmission shaft. The reducer 4 may change a driving force output by the powertrain based on different driving working conditions of an electric vehicle, to drive wheels to rotate at different speeds, and implement variable speed moving of the electric vehicle.

As shown in FIG. 6, the reducer 4 may not use the cooling working medium for heat dissipation, to reduce impurities in the cooling working medium, and improve cleanliness of the cooling working medium.

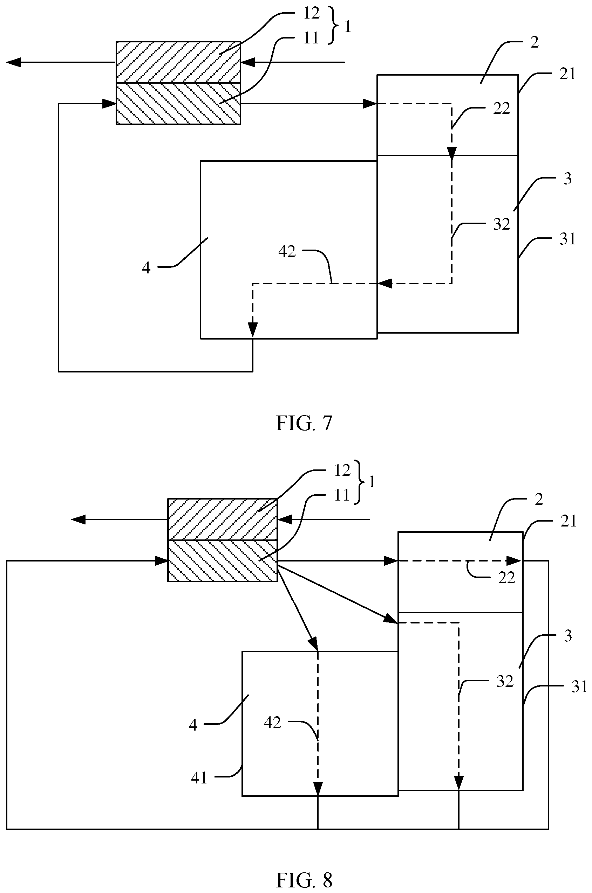

FIG. 7 is another schematic diagram of flowing of a cooling working medium of a powertrain according to an embodiment of this application. As shown in FIG. 7, in another embodiment, the reducer 4 may further include a fifth flow channel 42, and the fifth flow channel 42 passes through an accommodation cavity of the third housing 41. The fifth flow channel 42 communicates with the first flow channel 11. In this case, the cooling working medium may flow to the fifth flow channel 42, to dissipate heat for a structure of the reducer 4 located in the accommodation cavity of the third housing 41, and the cooling working medium may further lubricate a rotating part like a gear or a rotating shaft in the reducer 4.

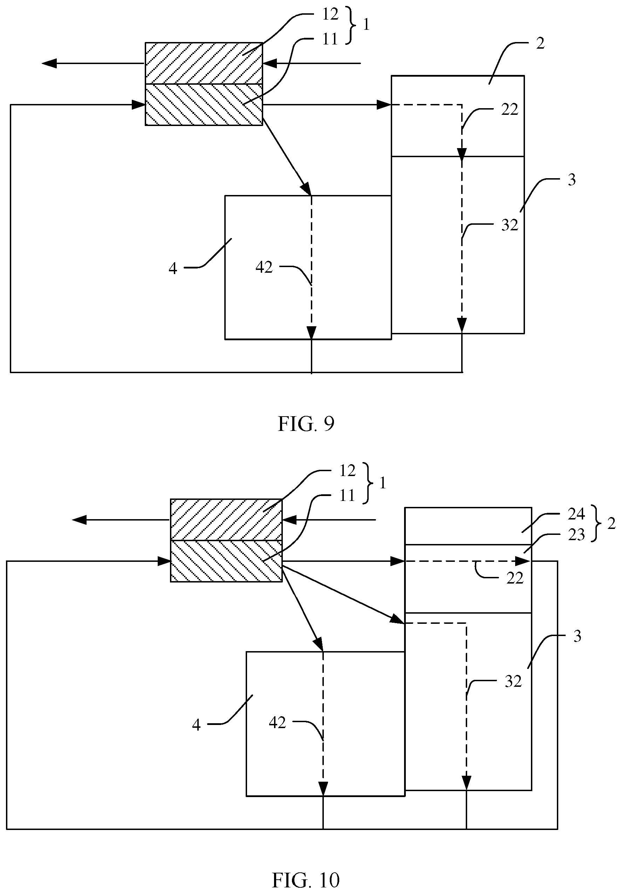

When the reducer 4 includes the fifth flow channel 42, a connection sequence of the first flow channel 11, the second flow channel 22, the third flow channel 32, and the fifth flow channel 42 is not limited. As shown in FIG. 7, in an embodiment, the first flow channel 11, the second flow channel 22, the third flow channel 32, and the fifth flow channel 42 are sequentially connected. Because there are many impurities in the reducer 4, and in this solution, the cooling working medium finally flows through the reducer 4, impurities flowing to the electronic assembly 2 and the motor 3 can be reduced. In addition, connection of each flow channel in this solution is equivalent to series connection, and a total quantity of connection openings is small. This helps reduce a leakage risk. FIG. 8 is another schematic diagram of flowing of a cooling working medium of a powertrain according to an embodiment of this application. As shown in FIG. 8, in another embodiment, the second flow channel 22, the third flow channel 32, and the fifth flow channel 42 may separately communicate with the first flow channel 11, that is, the second flow channel 22, the third flow channel 32, and the fifth flow channel 42 are connected in parallel. In this solution, all the cooling working medium flowing to the motor 3, the electronic assembly 2 and the reducer 4 flows out of the heat exchanger 1, so that a temperature is low. This helps improve a heat dissipation capacity and heat dissipation efficiency of each part of the powertrain. FIG. 9 is another schematic diagram of flowing of a cooling working medium of a powertrain according to an embodiment of this application. As shown in FIG. 9, in still another embodiment, the first flow channel 11, the second flow channel 22, and the third flow channel 32 may be sequentially connected, and the fifth flow channel 42 communicates with the first flow channel 11. A connection sequence of the first flow channel 11, the second flow channel 22, the third flow channel 32, and the fifth flow channel 42 is not limited in this application. There may be another embodiment, provided that the cooling working medium can flow to the motor 3, the electronic assembly 2, and the reducer 4. One by one is not listed here.

FIG. 10 is a schematic diagram of flowing of a cooling working medium of a powertrain according to the invention of this application. As shown in FIG. 10, in this embodiment of this application, the electronic assembly 2 includes a first sub-portion 23 and a second sub-portion 24. The first housing 21 includes a first accommodation cavity and a second accommodation cavity, the first sub-portion 23 is disposed in the first accommodation cavity, and the second sub-portion 24 is disposed in the second accommodation cavity. That is, the first sub-portion 23 and the second sub-portion 24 are respectively provided in different accommodation cavities. In a specific embodiment, the first sub-portion 23 may include a microcontroller unit (microcontroller unit, MCU), and an electronic component included in the first sub-portion 23 may be an insulated gate bipolar transistor (insulated gate bipolar transistor, IGBT). The second sub-portion 24 may include an on-board charger (on-board charger, OBC), or may further include a power distribution unit (power distribution unit, PDU).

In FIG. 10, the second flow channel 22 is disposed in the first accommodation cavity, so that the cooling working medium of the second flow channel 22 can be used to dissipate heat for the first sub-portion 23. That is, heat of a part of a structure of the electronic assembly 2 can be dissipated by using the cooling working medium. Specifically, heat generated by the first sub-portion 23 is large, and this solution helps improve heat dissipation effect of the first sub-portion 23.

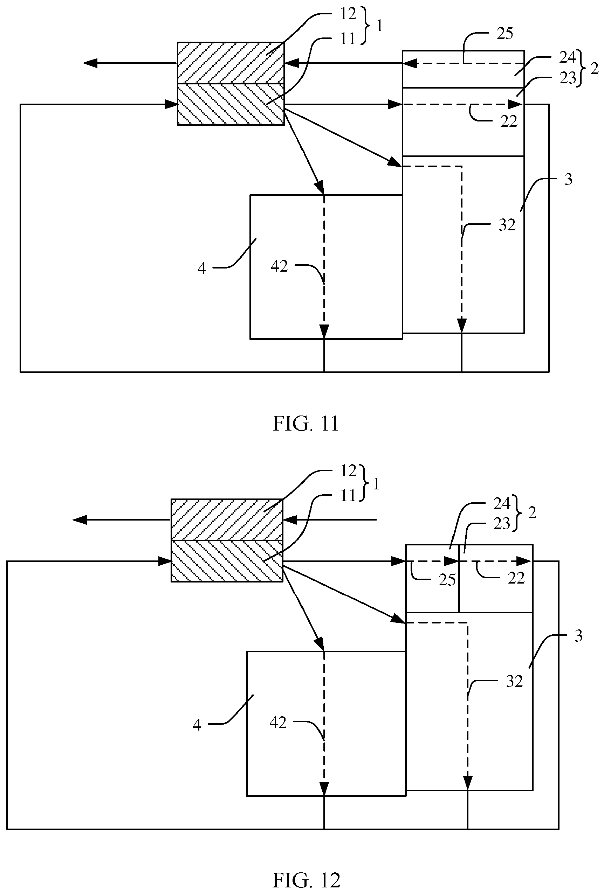

For a heat dissipation manner of the second sub-portion 24 of the electronic assembly 2, in FIG. 10, the second sub-portion 24 may not be provided with a liquid cooling heat dissipation structure, and performs heat dissipation in a natural heat dissipation manner. FIG. 11 is another schematic diagram of flowing of a cooling working medium of a powertrain according to an embodiment of this application. As shown in FIG. 11, in an embodiment, when heat dissipation is performed on the second sub-portion 24 through cooling liquid, a sixth flow channel 25 is disposed in the foregoing second accommodation cavity. The sixth flow channel 25 communicates with the fourth flow channel 12, and external coolant may flow through the second sub-portion 24 through the sixth flow channel 25, so that the external coolant is used to dissipate heat for the second sub-portion 24.

FIG. 12 is another schematic diagram of flowing of a cooling working medium of a powertrain according to an embodiment of this application. As shown in FIG. 12, in another embodiment, the sixth flow channel 25 also communicates with the first flow channel 11, and the cooling working medium may flow to the second sub-portion 24 through the sixth flow channel 25, so that the cooling working medium is used to dissipate heat for the second sub-portion 24. In this embodiment, the cooling working medium may be used to dissipate heat on all structures of the powertrain, to help improve integration of the powertrain and reduce a volume of the powertrain.

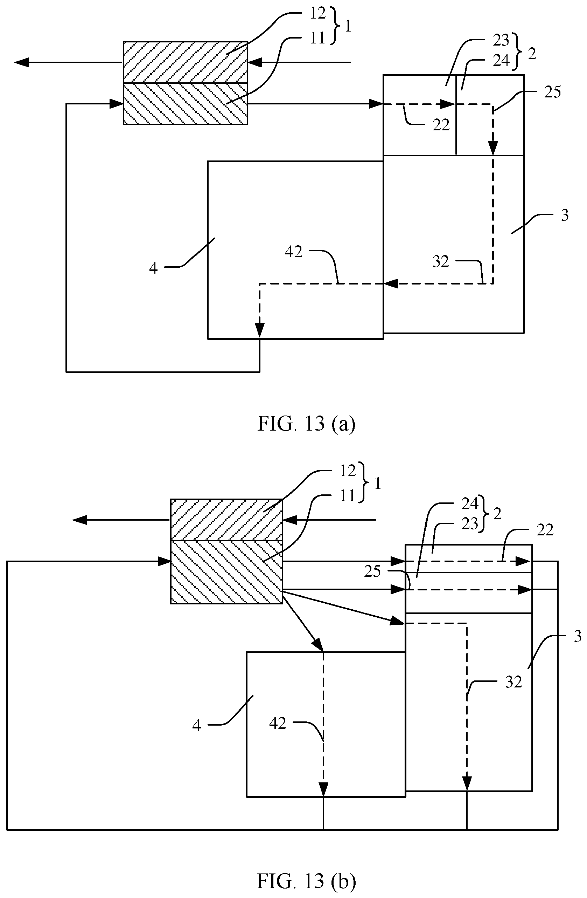

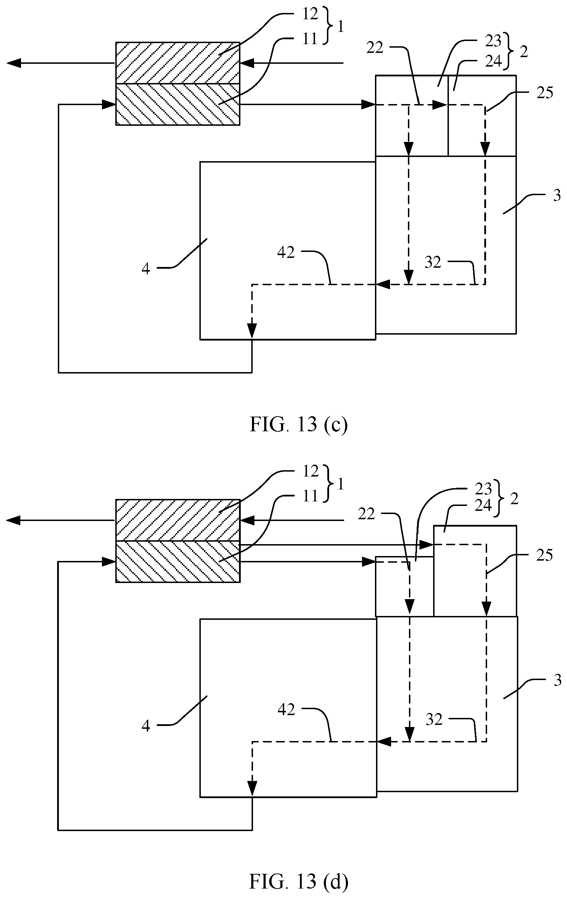

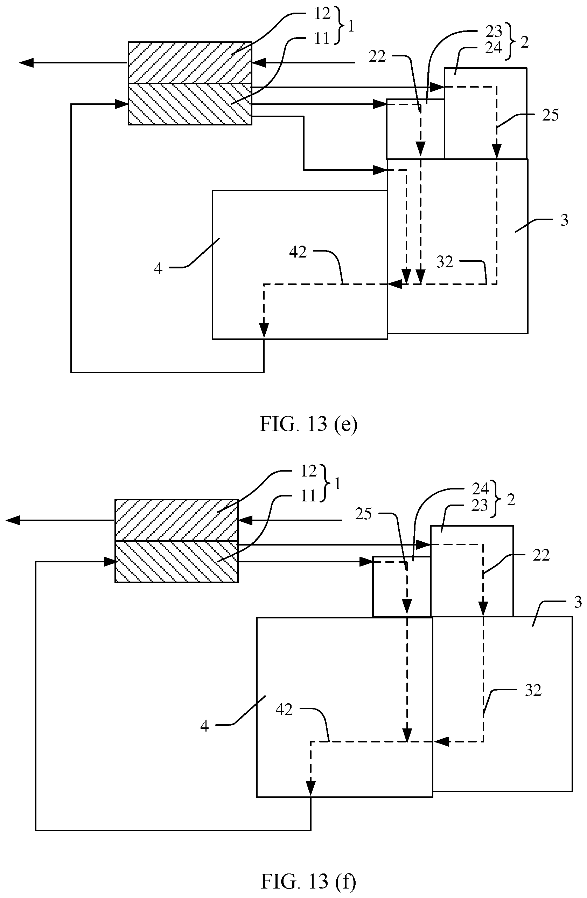

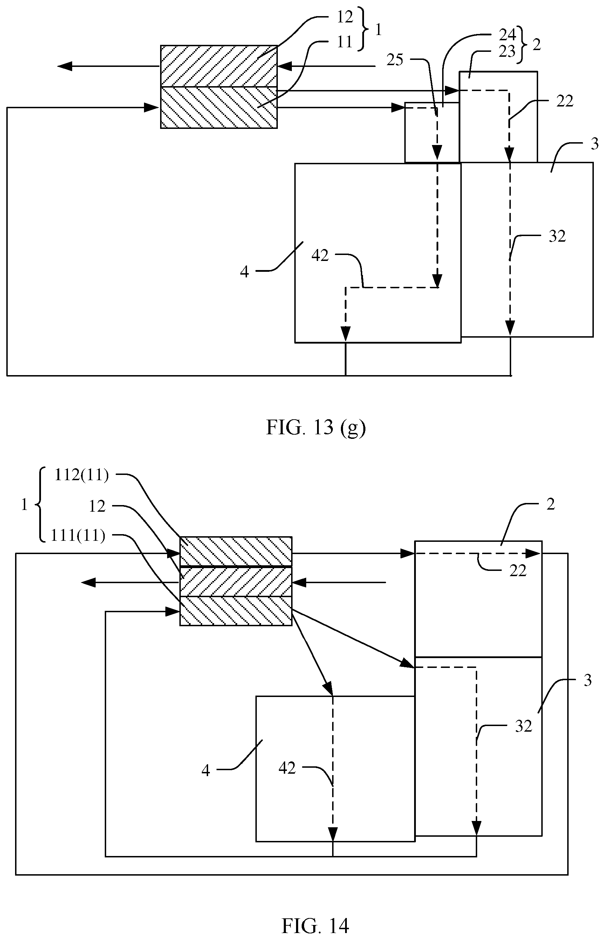

When the cooling working medium is used to dissipate heat for the first sub-portion 23, the second sub-portion 24, the motor 3, and the reducer 4, only the second flow channel 22, the third flow channel 32, the fifth flow channel 42, and the sixth flow channel 25 each communicate with the first flow channel 11, and the cooling working medium can flow to the third flow channel 32, the second flow channel 22, the fifth flow channel 42, and the sixth flow channel 25. A flow sequence of the cooling working medium is not limited. For example, as shown in FIG. 12, in an implementation, the second flow channel 22 may be connected in series with the sixth flow channel 25, and then connected in parallel with the third flow channel 32 and the fifth flow channel 42. FIG. 13 (a) to FIG. 13 (g) are schematic diagrams of flowing of a cooling working medium of a powertrain according to an embodiment of this application. As shown in FIG. 13 (a) to FIG. 13 (g), in other embodiments, the second flow channel 22, the third flow channel 32, the fifth flow channel 42, and the sixth flow channel 25 communicate with the first flow channel 11 in a plurality of manners. For example, as shown in FIG. 13 (a), the first flow channel 11, the second flow channel 22, the sixth flow channel 25, the third flow channel 32, and the fifth flow channel 42 are successively connected to implement series connection. In this solution, the housings may be directly connected through connection openings disposed in the housings, to reduce connection portions and reduce a leakage risk. In addition, in an embodiment shown in FIG. 13 (b), the second flow channel 22, the sixth flow channel 25, the third flow channel 32, and the fifth flow channel 42 each form a loop with the first flow channel 11, to implement parallel connection. This solution helps improve a heat dissipation capability. In addition, as shown in FIG. 13 (c) to FIG. 13 (g), in other embodiments, there may be other connection manners. This is not described in detail herein.

FIG. 14 is another schematic diagram of flowing of a cooling working medium of a powertrain according to an embodiment of this application. As shown in FIG. 14, in another embodiment, the first flow channel 11 includes a first sub-flow channel 111 and a second sub-flow channel 112. Specifically, the first sub-flow channel 111 and the second sub-flow channel 112 may be respectively disposed on two sides of the fourth flow channel 12. Specifically, a heat exchange wall includes a first heat exchange wall and a second heat exchange wall. The first heat exchange wall is located between the first sub-flow channel and the fourth flow channel 12 to implement heat exchange between the cooling working medium in the first sub-flow channel and external coolant in the fourth flow channel 12. The second heat exchange wall is located between the second sub-flow channel and the fourth flow channel 12 to implement the cooling working medium in the second sub-flow channel and the external coolant in the fourth flow channel 12. The external coolant in the fourth flow channel 12 is used to take away heat of the cooling working media in the first sub-flow channel 111 and the second sub-flow channel 112.

As shown in FIG. 14, the first sub-flow channel 111 may communicate with the third flow channel 32, and the second sub-flow channel 112 may communicate with the second flow channel 22. In this embodiment, the cooling working medium flowing through the electronic assembly 2 may be separated from the cooling working medium flowing through the motor 3. This helps reduce impurities in the cooling working medium flowing through the electronic assembly 2, and helps reduce a short-circuit risk of the electronic assembly 2.

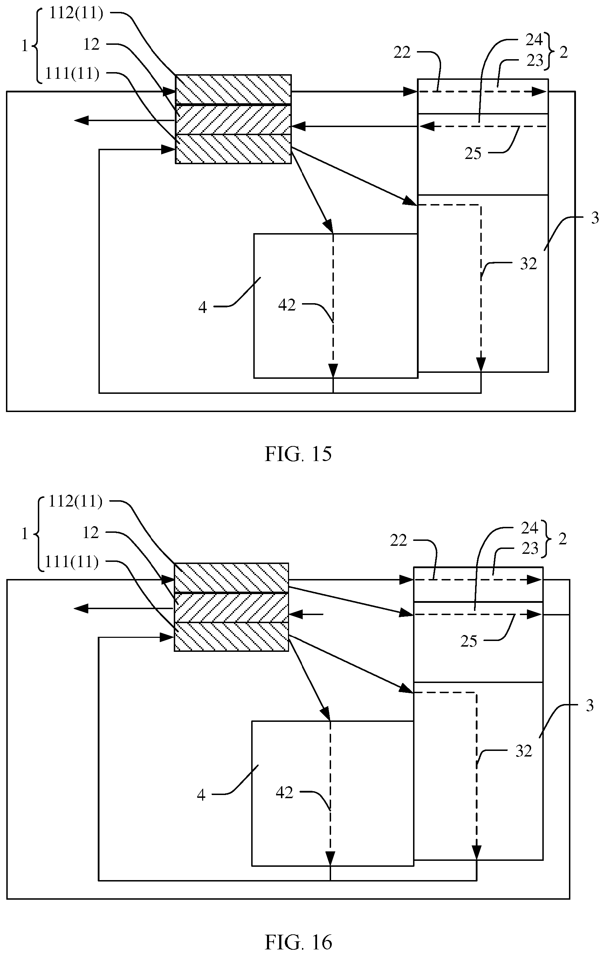

In a specific embodiment, flow directions of the cooling working media in the first sub-flow channel 111 and the second sub-flow channel 112 are not limited in this application. FIG. 15 is another schematic diagram of flowing of a cooling working medium of a powertrain according to an embodiment of this application. As shown in FIG. 15, in another embodiment, when the electronic assembly 2 includes a first sub-portion 23 and a second sub-portion 24, the second flow channel 22 of the first sub-portion 23 may communicate with the second sub-flow channel 112, and the sixth flow channel 25 of the second sub-portion 24 may communicate with the fourth flow channel 12. Alternatively, FIG. 16 is another schematic diagram of flowing of a cooling working medium of a powertrain according to an embodiment of this application. As shown in FIG. 16, in another embodiment, the second flow channel 22 of the first sub-portion 23 communicates with the second sub-flow channel 112. In addition, the sixth flow channel 25 of the second sub-portion 24 also communicates with the second sub-flow channel 112, that is, heat of the entire electronic assembly 2 is dissipated by using the cooling working medium in the second sub-flow channel 112.

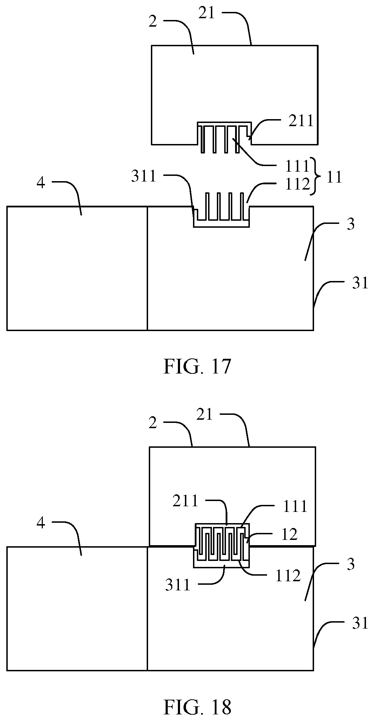

To further improve integration of the powertrain, the heat exchanger 1 may be formed in the housing of the powertrain. FIG. 17 is a schematic diagram of another structure of a powertrain according to an embodiment of this application. As shown in FIG. 17, in an embodiment, the first housing 21 has a first concave portion 211, and the first sub-flow channel 111 is located in the first concave portion 211. Specifically, the first sub-flow channel 111 may be fastened to the first housing 21, or the first sub-flow channel 111 and the first housing 21 may be integrally formed. The second housing 31 has a second concave portion 311, and the second sub-flow channel 112 is located in the second concave portion 311. Similarly, the second sub-flow channel 112 may be fastened to the second housing 31, or the second sub-flow channel 112 and the second housing 31 may be integrally formed. FIG. 18 is a schematic diagram of another structure of a powertrain according to an embodiment of this application. As shown in FIG. 18, after the first housing 21 and the second housing 31 are snap-fitted, the first concave portion 211 and the second concave portion 311 are opposite to each other and form an accommodation space. In other words, the heat exchanger is located in the accommodation space. The first sub-flow channel 111 is exactly opposite to the second sub-flow channel 112, and an outer wall of the first sub-flow channel 111 and an outer wall of the second sub-flow channel 112 form the fourth flow channel 12. The solution can improve integration of the powertrain and help reduce a volume of the powertrain.

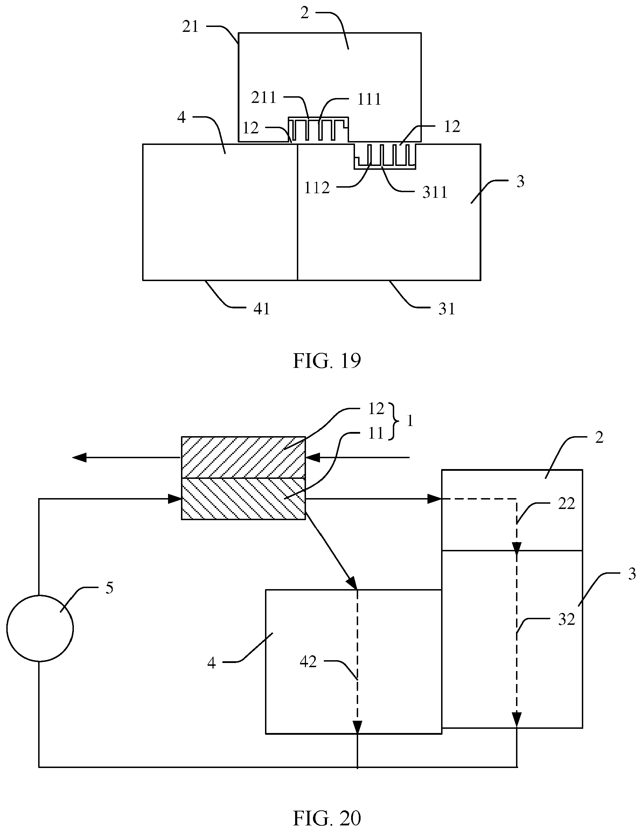

FIG. 19 is a schematic diagram of another structure of a powertrain according to an embodiment of this application. As shown in FIG. 19, in another embodiment, the first housing 21 also has a first concave portion 211, and the first sub-flow channel 111 is located in the first concave portion 211. Specifically, the first sub-flow channel 111 may be fastened to the first housing 21, or the first sub-flow channel 111 and the first housing 21 may be integrally formed. The second housing 31 also has a second concave portion 311, and the second sub-flow channel 112 is located in the second concave portion 311. Similarly, the second sub-flow channel 112 may be fastened to the second housing 31, or the second sub-flow channel 112 and the second housing 31 may be integrally formed. However, after the first housing 21 and the second housing 31 are snap-fitted, the first concave portion 211 and the second housing 31 are opposite to each other and form a first accommodation space. In other words, the first sub-flow channel 111 is located in the first accommodation space. The second concave portion 311 and the first housing 21 are opposite to each other and form a second accommodation space. In other words, the second sub-flow channel 112 is located in the second accommodation space. To be specific, a part of the heat exchanger is located in the first accommodation space and the other part of the heat exchanger is located in the second accommodation space. Certainly, the heat exchanger may further include another structure located in a position other than the first accommodation space and the second accommodation space. This is not limited in this application. The first sub-flow channel 111 and the second sub-flow channel 112 are disposed in a staggered manner. Therefore, an outer wall of the first sub-flow channel 111 and an outer wall of the second housing 31 form a part of the fourth flow channel 12, and an outer wall of the second sub-flow channel 112 and an outer wall of the first housing 21 also form a part of the fourth flow channel 12. The two parts of the fourth flow channel 12 are connected in series, so that external coolant flows through the two parts of the fourth flow channel 12, to respectively take away heat of the cooling working media in the first sub-flow channel 111 and the second sub-flow channel 112. The solution can also improve integration of the powertrain and help reduce a volume of the powertrain.

FIG. 20 is another schematic diagram of flowing of a cooling working medium of a powertrain according to an embodiment of this application. As shown in FIG. 20, in another embodiment, to improve cleanliness of the cooling working medium, the powertrain may further include a filter 5. A specific disposing position of the filter 5 is not limited, in the embodiment shown in FIG. 20, as long as the filter 5 communicates with the first flow channel 11, and the filter 5 is disposed in a loop of the cooling working medium.

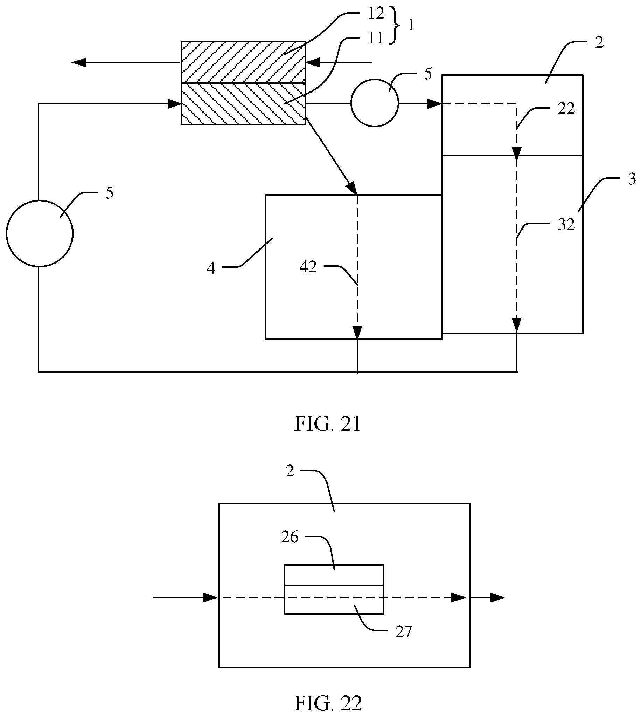

FIG. 21 is another schematic diagram of flowing of a cooling working medium of a powertrain according to an embodiment of this application. As shown in FIG. 21, in another embodiment, filters 5 may be further disposed outside a liquid inlet of the second flow channel 22, that is, the filters 5 are connected to the liquid inlet of the second flow channel 22, to enable the cooling working medium to be filtered before entering the electronic assembly 2. This improves cleanliness of the cooling working medium entering the electronic assembly 2, and reduces a short-circuit risk of the electronic assembly 2.

Certainly, in a specific embodiment, a quantity of filters 5 included in the powertrain is not limited, and one filter 5 or at least two filters 5 may be included. For example, the powertrain in the embodiment shown in FIG. 20 includes one filter 5, and the powertrain in the embodiment shown in FIG. 21 includes two filters 5.

A disposing manner of the second flow channel 22 is not limited in this application. FIG. 22 is a schematic diagram of a structure of an electronic assembly according to an embodiment of this application. As shown in FIG. 22, in an embodiment, the electronic assembly 2 includes an electronic component 26 and a heat sink 27. The electronic component 26 is thermally connected to the heat sink 27, and the heat sink 27 is used to dissipate heat for the electronic component 26. The heat sink 27 has an inner cavity, and the inner cavity may be a part of the second flow channel 22, that is, at least part of a structure of the second flow channel 22 is located in the heat sink 27. In this solution, the cooling working medium flows through the heat sink 27, to dissipate heat for the electronic component 26.

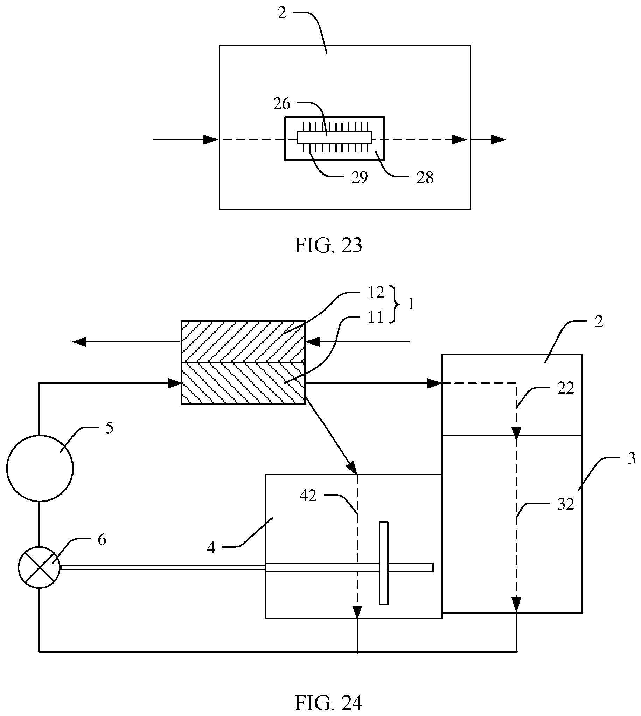

FIG. 23 is a schematic diagram of a structure of an electronic assembly according to an embodiment of this application. As shown in FIG. 23, in another embodiment, the electronic assembly 2 includes an electronic component 26 and a heat dissipation cavity 28. The electronic component 26 is disposed in a cavity of the heat dissipation cavity 28, and the cavity of the heat dissipation cavity 28 is used as a part of the second flow channel 22, that is, at least part of a structure of the second flow channel 22 is located in the heat dissipation cavity 28. If the cooling working medium flows through the cavity of the heat dissipation cavity 28, the electronic component 26 may be immersed in the cooling working medium, to improve a heat dissipation capability of the electronic component 26.

Still refer to FIG. 23. Heat dissipation fins 29 are disposed on a surface of the electronic component 26, and the heat dissipation fins 29 are also immersed in the cooling working medium. Therefore, a heat dissipation area of the electronic component 26 is increased, and a heat dissipation capability of the electronic component 26 is improved.

FIG. 24 is another schematic diagram of flowing of a cooling working medium of a powertrain according to an embodiment of this application. As shown in FIG. 24, in this embodiment of this application, the powertrain further includes a mechanical fuel pump 6. The mechanical fuel pump 6 communicates with the first flow channel 11, to drive the cooling working medium to flow through the first flow channel 11, and further drive the cooling working medium to flow in a cooling loop. The mechanical fuel pump 6 is in transmission connection to the motor 3, and the motor 3 can drive the mechanical fuel pump 6 to run, to drive the cooling working medium to flow. In the solution, the motor in a working process can drive the cooling working medium to flow without an additional driver. This is beneficial to reducing energy consumption of the powertrain and implementing energy saving.

In a specific embodiment, as shown in FIG. 24, the mechanical fuel pump 6 may be connected to the reducer 4, to drive the mechanical fuel pump 6 to run. A specific disposing position of the mechanical fuel pump 6 is not limited, as long as the cooling working medium can be driven to flow.

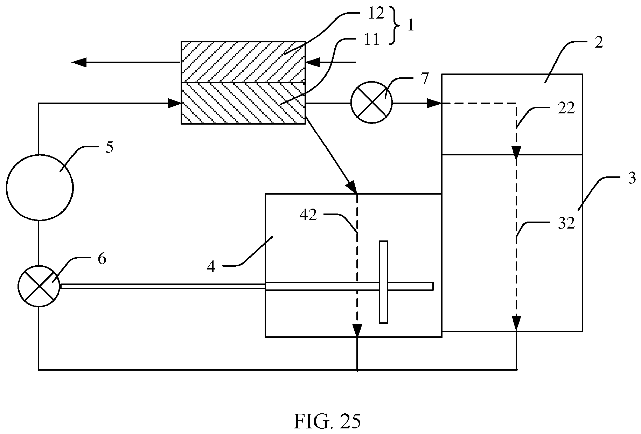

FIG. 25 is another schematic diagram of flowing of a cooling working medium of a powertrain according to an embodiment of this application. As shown in FIG. 25, in a further embodiment, the powertrain further includes an electronic fuel pump 7, and the electronic fuel pump 7 also communicates with the first flow channel 11. Therefore, the cooling working medium is driven to flow in the first flow channel 11, and the cooling working medium is further driven to flow in a cooling loop. In this embodiment, the mechanical fuel pump 6 may cooperate with the electronic fuel pump 7. When the mechanical fuel pump 6 can meet a flow velocity requirement of the cooling working medium, only the mechanical fuel pump 6 may be used to drive the cooling working medium to flow. This can realize an effect of energy saving. Especially for an electric vehicle, power consumption can be reduced, so that endurance of the vehicle can be improved. In addition, the cooling working medium is viscous at a low temperature, and the mechanical fuel pump 6 can reliably drive the cooling working medium to flow, to ensure that a refrigerating system can be started at a low temperature. When a working condition is harsh, to be specific, a heat dissipation requirement is high, the electronic fuel pump 7 can be started to increase a flow velocity of the cooling working medium, improve a heat dissipation capacity of the powertrain, and ensure heat dissipation effect of the powertrain.

When the powertrain includes the electronic fuel pump 7, the electronic fuel pump 7 can be electrically connected to a controller, and the controller can control the electronic fuel pump 7 to rotate forward or reversely. When the cooling working medium in the powertrain flows for a period of time, a narrow pipe line or the filter 5 may be blocked by impurities, for example, the second flow channel 22 of the electronic assembly 2. At this time, the electronic fuel pump 7 may be controlled to be reversed to reversely flush the impurities, so that the impurities do not adhere to a place for long time and cause a pipe blockage. This ensures that the cooling working medium can be in a working state, and improves heat dissipation reliability in a working process of the powertrain.

A manner of controlling the electronic fuel pump 7 to be reversed is not limited in this application. For example, the electronic fuel pump 7 may be periodically controlled to be reversed for a period of time, that is, the electronic fuel pump 7 may be controlled, at a specific interval, to be reversed for a period of time. Alternatively, a sensor may be provided in a cooling loop to control the electronic fuel pump 7 to be reversed for a period of time when a blockage of the flow channel of the cooling working medium is detected.

In addition, when the powertrain is started at a low temperature, a temperature of the cooling working medium is low, and the cooling working medium may be viscous and has poor fluidity. Heat of the cooling working medium may be first dissipated. Specifically, the cooling working medium may first be enabled to flow, but external coolant does not flow. In this case, heat generated by the powertrain increases the temperature of the cooling working medium, and the increased temperature is not taken away by the external coolant, so that the cooling working medium can be preheated.

## Claims

1. A powertrain, comprising a heat exchanger (1), an electronic assembly (2), and a motor (3), wherein the electronic assembly (2) comprises a first housing (21), the motor (3) comprises a second housing (31), the first housing (21) is fastened to the second housing (31), and the heat exchanger (1) is fastened to the first housing (21); and
the electronic assembly (2) comprises an electronic component (26), the electronic component (26) is disposed in an accommodation cavity of the first housing (21), the heat exchanger (1) comprises a first flow channel (11), and the first flow channel (11) is configured to transmit a cooling working medium; the electronic assembly (2) comprises a second flow channel (22), the second flow channel (22) passes through the accommodation cavity of the first housing (21), and the second flow channel (22) communicates with the first flow channel (11); and the motor (3) comprises a third flow channel (32), the third flow channel (32) passes through an accommodation cavity of the second housing (31), and the third flow channel (32) communicates with the first flow channel (11);
**characterized in that** the electronic assembly (2) comprises a first sub-portion (23) and a second sub-portion (24), the first housing (21) comprises a first accommodation cavity and a second accommodation cavity, the first sub-portion (23) is disposed in the first accommodation cavity, the second sub-portion (24) is disposed in the second accommodation cavity, and the second flow channel (22) is disposed in the first accommodation cavity.

2. The powertrain according to claim 1, wherein the heat exchanger (1) further comprises a fourth flow channel, the fourth flow channel is configured to transmit external coolant, and a heat exchange wall is disposed between the first flow channel (11) and the fourth flow channel.

3. The powertrain according to claim 1 or 2, further comprising a reducer, wherein the reducer comprises a third housing, the third housing is fastened to the second housing (31), the reducer comprises a fifth flow channel, the fifth flow channel passes through an accommodation cavity of the third housing, and the fifth flow channel communicates with the first flow channel (11).

4. The powertrain according to claim 3, wherein the second accommodation cavity comprises a sixth flow channel, and the sixth flow channel communicates with the fourth flow channel.

5. The powertrain according to claim 2, wherein the electronic assembly (2) comprises a first sub-portion (23) and a second sub-portion (24), the first housing (21) comprises a first accommodation cavity and a second accommodation cavity, the first sub-portion (23) is disposed in the first accommodation cavity, the second sub-portion (24) is disposed in the second accommodation cavity, the second flow channel (22) is disposed in the first accommodation cavity, the second accommodation cavity comprises a sixth flow channel, and the sixth flow channel communicates with the first flow channel (11).

6. The powertrain according to claim 2, wherein the first flow channel (11) comprises a first sub-flow channel and a second sub-flow channel, and the heat exchange wall comprises a first heat exchange wall and a second heat exchange wall; the first heat exchange wall is located between the first sub-flow channel and the fourth flow channel, and the second heat exchange wall is located between the second sub-flow channel and the fourth flow channel; and the first sub-flow channel communicates with the third flow channel (32), and the second sub-flow channel communicates with the second flow channel (22).

7. The powertrain according to claim 6, wherein the first housing (21) has a first concave portion, the second housing (31) has a second concave portion; and after the first housing (21) and the second housing (31) are snap-fitted, the first concave portion and the second concave portion are opposite to each other and form an accommodation space, and the heat exchanger (1) is located in the accommodation space; and
the first sub-flow channel is located in the first concave portion, the second sub-flow channel is located in the second concave portion, the first housing (21) and the second housing (31) are snap-fitted, and the fourth flow channel is formed between an outer wall of the first sub-flow channel and an outer wall of the second sub-flow channel.

8. The powertrain according to claim 6, wherein the first housing (21) has a first concave portion; the second housing (31) has a second concave portion; and after the first housing (21) and the second housing (31) are snap-fitted, the first concave portion and the second housing (31) are opposite to each other and form a first accommodation space, the second concave portion and the first housing (21) are opposite to each other and form a second accommodation space, one part of the heat exchanger (1) is located in the first accommodation space, and the other part of the heat exchanger (1) is located in the second accommodation space; and
the first sub-flow channel is located in the first concave portion, the second sub-flow channel is located in the second concave portion, the first housing (21) and the second housing (31) are snap-fitted, and a part of the fourth flow channel is formed between an outer wall of the first sub-flow channel and the second housing (31); and a part of the fourth flow channel is also formed between an outer wall of the second sub-flow channel and the first housing (21).

9. The powertrain according to any one of claims 1 to 8, further comprising a filter, wherein the filter communicates with the first flow channel (11).

10. The powertrain according to claim 9, wherein the filter communicates with a liquid inlet of the second flow channel (22).

11. The powertrain according to any one of claims 1 to 10, wherein the electronic assembly (2) comprises the electronic component (26) and a heat sink, the electronic component (26) is thermally connected to the heat sink, the second flow channel (22) passes through the heat sink, and the cooling working medium flows through the heat sink.

12. The powertrain according to any one of claims 1 to 11, wherein the electronic assembly (2) comprises the electronic component (26) and a heat dissipation cavity, the electronic component (26) is disposed in a cavity of the heat dissipation cavity, at least part of a structure of the second flow channel (22) is located in the heat dissipation cavity, and the cooling working medium flows through the cavity of the heat dissipation cavity, heat dissipation fins are disposed on a surface of the electronic component (26).

13. The powertrain according to any one of claims 1 to 12, further comprising a mechanical fuel pump, wherein the mechanical fuel pump communicates with the first flow channel (11) and is configured to drive the cooling working medium to flow, the mechanical fuel pump is in transmission connection to the motor (3), and the motor (3) drives the mechanical fuel pump to run;
the powertrain further comprises an electronic fuel pump, wherein the electronic fuel pump communicates with the first flow channel (11) and is configured to drive the cooling working medium to flow;
wherein the electronic fuel pump communicates with the first flow channel (11), the electronic fuel pump is electrically connected to a controller, and the controller is configured to control the electronic fuel pump to rotate forward or reversely.

14. A mechanical device, comprising an output portion, a drive mechanism, and the powertrain according to any one of claims 1 to 13, wherein the powertrain is connected to the output portion via the drive mechanism.

## Patentansprüche

1. Antriebsstrang, umfassend einen Wärmetauscher (1), eine elektronische Anordnung (2) und einen Motor (3), wobei die elektronische Anordnung (2) ein erstes Gehäuse (21) umfasst, der Motor (3) ein zweites Gehäuse (31) umfasst, das erste Gehäuse (21) am zweiten Gehäuse (31) befestigt ist und der Wärmetauscher (1) am ersten Gehäuse (21) befestigt ist; und
wobei die elektronische Anordnung (2) eine elektronische Komponente (26) umfasst, die elektronische Komponente (26) in einem Aufnahmehohlraum des ersten Gehäuses (21) angeordnet ist, der Wärmetauscher (1) einen ersten Strömungskanal (11) umfasst und der erste Strömungskanal (11) ausgelegt ist zum Übertragen eines kühlenden Arbeitsmediums; wobei die elektronische Anordnung (2) einen zweiten Strömungskanal (22) umfasst, wobei der zweite Strömungskanal (22) durch den Aufnahmehohlraum des ersten Gehäuses (21) läuft und der zweite Strömungskanal (22) mit dem ersten Strömungskanal (11) kommuniziert; und wobei der Motor (3) einen dritten Strömungskanal (32) umfasst, der dritte Strömungskanal (32) durch einen Aufnahmehohlraum des zweiten Gehäuses (31) läuft und der dritte Strömungskanal (32) mit dem ersten Strömungskanal (11) kommuniziert;
**dadurch gekennzeichnet, dass** die elektronische Anordnung (2) einen ersten Unterabschnitt (23) und einen zweiten Unterabschnitt (24) umfasst, das erste Gehäuse (21) einen ersten Aufnahmehohlraum und einen zweiten Aufnahmehohlraum umfasst, der erste Unterabschnitt (23) im ersten Aufnahmehohlraum angeordnet ist, der zweite Unterabschnitt (24) im zweiten Aufnahmehohlraum angeordnet ist und der zweite Strömungskanal (22) im ersten Aufnahmehohlraum angeordnet ist.

2. Antriebsstrang nach Anspruch 1, wobei der Wärmetauscher (1) ferner einen vierten Strömungskanal umfasst, der vierte Strömungskanal ausgelegt ist zum Übertragen von externem Kühlmittel und eine Wärmeaustauschwand zwischen dem ersten Strömungskanal (11) und dem vierten Strömungskanal angeordnet ist.

3. Antriebsstrang nach Anspruch 1 oder 2, ferner umfassend ein Untersetzungsgetriebe, wobei das Untersetzungsgetriebe ein drittes Gehäuse umfasst, das dritte Gehäuse am zweiten Gehäuse (31) befestigt ist, das Untersetzungsgetriebe einen fünften Strömungskanal umfasst, der fünfte Strömungskanal durch einen Aufnahmehohlraum des dritten Gehäuses läuft und der fünfte Strömungskanal mit dem ersten Strömungskanal (11) kommuniziert.

4. Antriebsstrang nach Anspruch 3, wobei der zweite Aufnahmehohlraum einen sechsten Strömungskanal umfasst und der sechste Strömungskanal mit dem vierten Strömungskanal kommuniziert.

5. Antriebsstrang nach Anspruch 2, wobei die elektronische Anordnung (2) einen ersten Unterabschnitt (23) und einen zweiten Unterabschnitt (24) umfasst, das erste Gehäuse (21) einen ersten Aufnahmehohlraum und einen zweiten Aufnahmehohlraum umfasst, der erste Unterabschnitt (23) im ersten Aufnahmehohlraum angeordnet ist, der zweite Unterabschnitt (24) im zweiten Aufnahmehohlraum angeordnet ist, der zweite Strömungskanal (22) im ersten Aufnahmehohlraum angeordnet ist, der zweite Aufnahmehohlraum einen sechsten Strömungskanal umfasst und der sechste Strömungskanal mit dem ersten Strömungskanal (11) kommuniziert.

6. Antriebsstrang nach Anspruch 2, wobei der erste Strömungskanal (11) einen ersten Unterströmungskanal und einen zweiten Unterströmungskanal umfasst, und die Wärmeaustauschwand eine erste Wärmeaustauschwand und eine zweite Wärmeaustauschwand umfasst; wobei sich die erste Wärmeaustauschwand zwischen dem ersten Unterströmungskanal und dem vierten Strömungskanal befindet und sich die zweite Wärmeaustauschwand zwischen dem zweiten Unterströmungskanal und dem vierten Strömungskanal befindet; und wobei der erste Unterströmungskanal mit dem dritten Strömungskanal (32) kommuniziert und der zweite Unterströmungskanal mit dem zweiten Strömungskanal (22) kommuniziert.

7. Antriebsstrang nach Anspruch 6, wobei das erste Gehäuse (21) einen ersten konkaven Abschnitt aufweist, das zweite Gehäuse (31) einen zweiten konkaven Abschnitt aufweist; und wobei, nachdem das erste Gehäuse (21) und das zweite Gehäuse (31) eingerastet sind, der erste konkave Abschnitt und der zweite konkave Abschnitt einander gegenüberliegend sind und einen Aufnahmeraum bilden, und sich der Wärmetauscher (1) in dem Aufnahmeraum befindet; und
wobei sich der erste Unterströmungskanal im ersten konkaven Abschnitt befindet, sich der zweite Unterströmungskanal im zweiten konkaven Abschnitt befindet, das erste Gehäuse (21) und das zweite Gehäuse (31) eingerastet sind und der vierte Strömungskanal zwischen einer äußeren Wand des ersten Unterströmungskanals und einer äußeren Wand des zweiten Unterströmungskanals gebildet ist.

8. Antriebsstrang nach Anspruch 6, wobei das erste Gehäuse (21) einen ersten konkaven Abschnitt aufweist, das zweite Gehäuse (31) einen zweiten konkaven Abschnitt aufweist; und wobei, nachdem das erste Gehäuse (21) und das zweite Gehäuse (31) eingerastet sind, der erste konkave Abschnitt und das zweite Gehäuse (31) einander gegenüberliegen und einen ersten Aufnahmeraum bilden, der zweite konkave Abschnitt und das erste Gehäuse (21) einander gegenüberliegen und einen zweiten Aufnahmeraum bilden, sich ein Teil des Wärmetauschers (1) im ersten Aufnahmeraum befindet und sich der andere Teil des Wärmetauschers (1) im zweiten Aufnahmeraum befindet; und
wobei sich der erste Unterströmungskanal im ersten konkaven Abschnitt befindet, sich der zweite Unterströmungskanal im zweiten konkaven Abschnitt befindet, das erste Gehäuse (21) und das zweite Gehäuse (31) eingerastet sind und ein Teil des vierten Strömungskanals zwischen einer äußeren Wand des ersten Unterströmungskanals und dem zweiten Gehäuse (31) gebildet ist und ein Teil des vierten Strömungskanals ebenfalls zwischen einer äußeren Wand des zweiten Unterströmungskanals und dem ersten Gehäuse (21) gebildet ist.

9. Antriebsstrang nach einem der Ansprüche 1 bis 8, ferner umfassend einen Filter, wobei der Filter mit dem ersten Strömungskanal (11) kommuniziert.

10. Antriebsstrang nach Anspruch 9, wobei der Filter mit einem Flüssigkeitseinlass des zweiten Strömungskanals (22) kommuniziert.

11. Antriebsstrang nach einem der Ansprüche 1 bis 10, wobei die elektronische Anordnung (2) die elektronische Komponente (26) und eine Wärmesenke umfasst, die elektronische Komponente (26) thermisch mit der Wärmesenke verbunden ist, der zweite Strömungskanal (22) durch die Wärmesenke läuft und das kühlende Arbeitsmedium durch die Wärmesenke strömt.

12. Antriebsstrang nach einem der Ansprüche 1 bis 11, wobei die elektronische Anordnung (2) die elektronische Komponente (26) und einen Wärmeableitungshohlraum umfasst, die elektronische Komponente (26) in einem Hohlraum des Wärmeableitungshohlraums angeordnet ist, sich zumindest ein Teil einer Struktur des zweiten Strömungskanals (22) in dem Wärmeableitungshohlraum befindet und das kühlende Arbeitsmedium durch den Hohlraum des Wärmeableitungshohlraums strömt, wobei Wärmeableitungsrippen auf einer Oberfläche der elektronischen Komponente (26) angeordnet sind.

13. Antriebsstrang nach einem der Ansprüche 1 bis 12, ferner umfassend eine mechanische Kraftstoffpumpe, wobei die mechanische Kraftstoffpumpe mit dem ersten Strömungskanal (11) kommuniziert und ausgelegt ist zum Antreiben des kühlenden Arbeitsmediums, um zu strömen, und wobei die mechanische Kraftstoffpumpe in einer Übertragungsverbindung mit dem Motor (3) ist und der Motor (3) die mechanische Kraftstoffpumpe antreibt, um zu laufen;
wobei der Antriebsstrang ferner eine elektronische Kraftstoffpumpe umfasst, wobei die elektronische Kraftstoffpumpe mit dem ersten Strömungskanal (11) kommuniziert und ausgelegt ist zum Antreiben des kühlenden Arbeitsmediums, um zu strömen;
wobei die elektronische Kraftstoffpumpe mit dem ersten Strömungskanal (11) kommuniziert, die elektronische Kraftstoffpumpe elektrisch mit einer Steuerung verbunden ist und die Steuerung ausgelegt ist zum Steuern der elektronischen Kraftstoffpumpe, um vorwärts oder rückwärts zu rotieren.

14. Mechanische Vorrichtung, umfassend einen Ausgangsabschnitt, einen Antriebsmechanismus und den Antriebsstrang nach einem der Ansprüche 1 bis 13, wobei der Antriebsstrang über den Antriebsmechanismus mit dem Ausgangsabschnitt verbunden ist.

## Revendications

1. Groupe motopropulseur, comprenant un échangeur de chaleur (1), un ensemble électronique (2) et un moteur (3), l'ensemble électronique (2) comprenant un premier carter (21), le moteur (3) comprenant un deuxième carter (31), le premier carter (21) étant fixé au deuxième carter (31), et l'échangeur de chaleur (1) étant fixé au premier carter (21) ; et l'ensemble électronique (2) comprenant un composant électronique (26), le composant électronique (26) étant disposé dans une cavité de logement du premier carter (21), l'échangeur de chaleur (1) comprenant un premier canal d'écoulement (11), et le premier canal d'écoulement (11) étant configuré pour transmettre un fluide de refroidissement ; l'ensemble électronique (2) comprenant un deuxième canal d'écoulement (22), le deuxième canal d'écoulement (22) passant par la cavité de logement du premier carter (21), et le deuxième canal d'écoulement (22) communiquant avec le premier canal d'écoulement (11) ; et le moteur (3) comprenant un troisième canal d'écoulement (32), le troisième canal d'écoulement (32) passant par une cavité de logement du deuxième carter (31), et le troisième canal d'écoulement (32) communiquant avec le premier canal d'écoulement (11) ; **caractérisé en ce que** l'ensemble électronique (2) comprend une première sous-partie (23) et une deuxième sous-partie (24), le premier carter (21) comprenant une première cavité de logement et une deuxième cavité de logement, la première sous-partie (23) étant disposée dans la première cavité de logement, la deuxième sous-partie (24) étant disposée dans la deuxième cavité de logement, et le deuxième canal d'écoulement (22) étant disposé dans la première cavité de logement.

2. Groupe motopropulseur selon la revendication 1, dans lequel l'échangeur de chaleur (1) comprend en outre un quatrième canal d'écoulement, le quatrième canal d'écoulement étant configuré pour transmettre un liquide de refroidissement externe, et une paroi d'échange de chaleur étant disposée entre le premier canal d'écoulement (11) et le quatrième canal d'écoulement.

3. Groupe motopropulseur selon la revendication 1 ou 2, comprenant en outre un réducteur, le réducteur comprenant un troisième carter, le troisième carter étant fixé au deuxième carter (31), le réducteur comprenant un cinquième canal d'écoulement, le cinquième canal d'écoulement passant par une cavité de logement du troisième carter, et le cinquième canal d'écoulement communiquant avec le premier canal d'écoulement (11).

4. Groupe motopropulseur selon la revendication 3, dans lequel la deuxième cavité de logement comprend un sixième canal d'écoulement, et le sixième canal d'écoulement communique avec le quatrième canal d'écoulement.

5. Groupe motopropulseur selon la revendication 2, dans lequel l'ensemble électronique (2) comprend une première sous-partie (23) et une deuxième sous-partie (24), le premier carter (21) comprenant une première cavité de logement et une deuxième cavité de logement, la première sous-partie (23) étant disposée dans la première cavité de logement, la deuxième sous-partie (24) étant disposée dans la deuxième cavité de logement, le deuxième canal d'écoulement (22) étant disposé dans la première cavité de logement, la deuxième cavité de logement comprenant un sixième canal d'écoulement, et le sixième canal d'écoulement communiquant avec le premier canal d'écoulement (11).

6. Groupe motopropulseur selon la revendication 2, dans lequel le premier canal d'écoulement (11) comprend un premier sous-canal d'écoulement et un deuxième sous-canal d'écoulement, la paroi d'échange de chaleur comprend une première paroi d'échange de chaleur et une deuxième paroi d'échange de chaleur ; la première paroi d'échange de chaleur est située entre le premier sous-canal d'écoulement et le quatrième canal d'écoulement, et la deuxième paroi d'échange de chaleur est située entre le deuxième sous-canal d'écoulement et le quatrième canal d'écoulement ; et le premier sous-canal d'écoulement communique avec le troisième canal d'écoulement (32), et le deuxième sous-canal d'écoulement communique avec le deuxième canal d'écoulement (22).

7. Groupe motopropulseur selon la revendication 6, dans lequel le premier carter (21) a une première partie concave, le deuxième carter (31) a une deuxième partie concave ; et après assemblage du premier carter (21) et du deuxième carter (31) par encliquetage, la première partie concave et la deuxième partie concave sont en regard l'une de l'autre et forment un espace de logement, et l'échangeur de chaleur (1) est situé dans l'espace de logement ; et le premier sous-canal d'écoulement est situé dans la première partie concave, le deuxième sous-canal d'écoulement est situé dans la deuxième partie concave, le premier carter (21) et le deuxième carter (31) sont assemblés par encliquetage, et le quatrième canal d'écoulement est formé entre une paroi extérieure du premier sous-canal d'écoulement et une paroi extérieure du deuxième sous-canal d'écoulement.

8. Groupe motopropulseur selon la revendication 6, dans lequel le premier carter (21) a une première partie concave ; le deuxième carter (31) a une deuxième partie concave ; et après assemblage du premier carter (21) et du deuxième carter (31) par encliquetage, la première partie concave et le deuxième carter (31) sont en regard l'un de l'autre et forment un premier espace de logement, la deuxième partie concave et le premier carter (21) sont en regard l'un de l'autre et forment un deuxième espace de logement, une partie de l'échangeur de chaleur (1) est située dans le premier espace de logement, et l'autre partie de l'échangeur de chaleur (1) est située dans le deuxième espace de logement ; et
le premier sous-canal d'écoulement est situé dans la première partie concave, le deuxième sous-canal d'écoulement est situé dans la deuxième partie concave, le premier carter (21) et le deuxième carter (31) sont assemblés par encliquetage, et une partie du quatrième canal d'écoulement est formée entre une paroi extérieure du premier sous-canal d'écoulement et le deuxième carter (31) ; et une partie du quatrième canal d'écoulement est également formée entre une paroi extérieure du deuxième sous-canal d'écoulement et le premier carter (21).

9. Groupe motopropulseur selon l'une quelconque des revendications 1 à 8, comprenant en outre un filtre, dans lequel le filtre communique avec le premier canal d'écoulement (11).

10. Groupe motopropulseur selon la revendication 9, dans lequel le filtre communique avec un orifice d'admission de liquide du deuxième canal d'écoulement (22).

11. Groupe motopropulseur selon l'une quelconque des revendications 1 à 10, dans lequel l'ensemble électronique (2) comprend le composant électronique (26) et un dissipateur de chaleur, le composant électronique (26) est thermiquement couplé au dissipateur de chaleur, le deuxième canal d'écoulement (22) passe par le dissipateur de chaleur, et le fluide de refroidissement s'écoule à travers le dissipateur de chaleur.

12. Groupe motopropulseur selon l'une quelconque des revendications 1 à 11, dans lequel l'ensemble électronique (2) comprend le composant électronique (26) et une cavité de dissipation de chaleur, le composant électronique (26) est disposé dans une cavité de la cavité de dissipation de chaleur, au moins une partie d'une structure du deuxième canal d'écoulement (22) est située dans la cavité de dissipation de chaleur, et le fluide de refroidissement s'écoule à travers la cavité de la cavité de dissipation de chaleur, des ailettes de dissipation de chaleur sont disposées sur une surface du composant électronique (26).

13. Groupe motopropulseur selon l'une quelconque des revendications 1 à 12, comprenant en outre une pompe à carburant mécanique, la pompe à carburant mécanique communiquant avec le premier canal d'écoulement (11) et étant configurée pour entraîner l'écoulement du fluide de refroidissement, la pompe à carburant mécanique étant couplée au moteur (3) par une transmission, et le moteur (3) entraînant la mise en route de la pompe à carburant mécanique ;
le groupe motopropulseur comprenant en outre une pompe à carburant électronique, la pompe à carburant électronique communiquant avec le premier canal d'écoulement (11) et étant configurée pour entraîner l'écoulement du fluide de refroidissement ;
la pompe à carburant électronique communiquant avec le premier canal d'écoulement (11), la pompe à carburant électronique étant électriquement connectée à un contrôleur, et le contrôleur étant configuré pour commander la pompe à carburant électronique de sorte à ce qu'elle tourne vers l'avant ou en sens inverse.

14. Dispositif mécanique, comprenant une partie de sortie, un mécanisme d'entraînement et le groupe motopropulseur selon l'une quelconque des revendications 1 à 13, le groupe motopropulseur étant couplé à la partie de sortie par l'intermédiaire du mécanisme d'entraînement.
